(19) Europäisches Patentamt
European Patent Office
Office européen des brevets

(11) **EP 3 632 862 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **19187425.4**

(22) Anmeldetag: **19.07.2019**

(51) Internationale Patentklassifikation (IPC):
*C03C 3/085* (2006.01)    *A47B 13/12* (2006.01)
*C03B 29/08* (2006.01)    *C03B 32/02* (2006.01)
*C03C 10/00* (2006.01)    *F24C 15/10* (2006.01)

(52) Gemeinsame Patentklassifikation (CPC):
**C03C 3/085; A47B 77/022; C03B 29/08; C03B 32/02; C03C 10/0027; F24C 15/10**

(54) **ARBEITSPLATTE INSBESONDERE FÜR KÜCHENMÖBEL, KOCHTISCHE ODER DERGLEICHEN SOWIE VERFAHREN ZUR HERSTELLUNG EINER ARBEITSPLATTE**

WORKTOP, IN PARTICULAR FOR KITCHEN FURNITURE, COOKING TABLES OR THE LIKE AND METHOD FOR PRODUCING A WORKTOP

PLAN DE TRAVAIL, EN PARTICULIER POUR MEUBLES DE CUISINE, TABLES DE CUISSON OU ANALOGUES AINSI QUE PROCÉDÉ DE FABRICATION D'UN PLAN DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2018 DE 102018216743**

(43) Veröffentlichungstag der Anmeldung:
**08.04.2020 Patentblatt 2020/15**

(73) Patentinhaber: **SCHOTT AG**
**55122 Mainz (DE)**

(72) Erfinder:
• **Dudek, Roland**
**55545 Bad Kreuznach (DE)**
• **Gabel, Falk**
**65388 Schlangenbad (DE)**
• **Bockmeyer, Matthias**
**55124 Mainz (DE)**

(74) Vertreter: **Ullrich & Naumann PartG mbB**
**Schneidmühlstrasse 21**
**69115 Heidelberg (DE)**

(56) Entgegenhaltungen:
**WO-A1-2012/019833     WO-A1-2017/042474**
**WO-A1-99/06334     DE-A1- 102018 110 908**

**Beschreibung**

Die Erfindung betrifft eine Arbeitsplatte für Küchenmöbel, Kochtische oder dergleichen.

Die Erfindung betrifft weiter ein Verfahren zur Herstellung einer Arbeitsplatte.

Die Erfindung betrifft weiter eine Kücheneinrichtungsanordnung.

Obwohl die vorliegende Erfindung allgemein auf beliebige Arbeitsplatten anwendbar ist, wird die vorliegende Erfindung in Bezug auf Arbeitsplatten für Kochtische bzw. Küchenmöbel beschrieben.

Bei bisher bekannten Kücheneinrichtungen werden das Kochfeld und der Arbeitsbereich, beispielsweise in Form einer Steinplatte oder dergleichen, getrennt hergestellt und erst vor Ort bei einem Kunden zusammengefügt. Ausgehend hiervon ist es bekannt geworden, eine Integration eines Kochfeldes in Küchenarbeitsplatten vorzunehmen, um die visuelle und im Wesentlichen physikalische Trennung von Kochfläche und nebenliegendem Arbeitsbereich aufzuheben und stattdessen eine gemeinsam benutzbare Fläche als Arbeits- und Kochbereich - Arbeitsplatte - vorzusehen.

Aus der DE 20 2016 008 264 U1 ist eine Möbel- und/oder Küchenausrüstung mit einer Arbeitsplatte bekannt geworden. Die Arbeitsplatte ist dabei von mindestens einem Substrat aus monolithischem Glasmaterial mit einer Oberfläche größer als 0,7 m$^2$ gebildet, wobei das Substrat eine Luminosität L\* größer als 10, einen Lichttransmissionsgrad TL kleiner als 50 %, einen Opazitätsfaktor größer als 90 und gegebenenfalls eine Trübung größer als 15 % aufweist.

Aus der WO 99/063334 A1 ist eine Glasplatte zum Abdecken von wärmeerzeugenden Elementen zur Verwendung in Küchenmöbeln, aus der WO 2017/042474 A1 sind Glaskeramikplatten für Küchenmöbel mit hohen Helligkeitswerten, aus der DE 10 2018 110 908 A1 ist eine transparente, eingefärbte Lithiumaluminiumsilikat-Glaskeramik, und aus der WO 2012/019833 A1 ist eine lithiumhaltige transparente Glaskeramik bekannt geworden.

Neben den grundlegenden physikalischen und chemischen Materialeigenschaften sind hierbei auch ästhetische Anforderungen an die Arbeitsplatte zu berücksichtigen.

Bei der Wahl eines beispielsweise hellen Farbtons der Arbeitsplatte, insbesondere bei größeren Abmessungen einer Arbeitsplatte verglichen zu den Abmessungen lediglich eines Kochfelds, sind visuell erkennbare Farbtonunterschiede unerwünscht, sofern nicht in bestimmten Bereichen eine sich von der Umgebung abhebende Kennzeichnung aus funktionellen oder dekorativen Gründen gewünscht ist. Darüber hinaus erschweren Farbtonunterschiede eine Funktionsbeschriftung oder allgemein eine optische Kenntlichmachung unterschiedlicher Bereiche der Arbeitsplatte: Werden bei einem hellen Farbton der Arbeitsplatte ebenfalls helle Beschriftungen für Bedienelemente vorgesehen, so sind diese schlechter wahrnehmbar und es kann zu Fehlbedienungen durch einen Benutzer kommen. Sind Beschriftungen für dedizierte Kochflächen bei einem hellen Farbton der Arbeitsplatte ebenfalls hell gehalten, wird gegebenenfalls Kochgeschirr aufgrund der nicht oder nur teilweise wahrnehmbaren Kennzeichnung falsch platziert, was zu stark unterschiedlicher Hitze in unterschiedlichen Bereichen des Kochgeschirrs führen kann. Insoweit wird hierdurch die Farbwahl bei der Beschriftung der Arbeitsplatte eingeschränkt. Ein weiterer Nachteil ist, dass durch die Farbtonunterschiede auch eine unterschiedliche Transmission im sichtbaren und im Infrarotbereich erfolgt, was zu einer ungleichmäßigen Übertragung von Wärmestrahlung durch unter der gemeinsam nutzbaren Fläche angeordneten Heizelementen führt.

Eine Aufgabe der vorliegenden Erfindung ist es daher eine Arbeitsplatte und eine Kücheneinrichtungsanordnung bereitzustellen, die einfach und kostengünstig herzustellen sind, eine hohe Homogenität in der Transmission in dem sichtbaren und/oder Infrarotbereich sowie in der Färbung aufweisen und eine hohe Flexibilität bei der Farbauswahl für die Färbung der Arbeitsplatte als auch bei der Farbe der Beschriftung derselben aufweisen. Eine weitere Aufgabe der vorliegenden Erfindung ist es ein Verfahren zur Herstellung einer Arbeitsplatte bereitzustellen, welches einfach und kostengünstig durchzuführen ist. Eine weitere Aufgabe der vorliegenden Erfindung ist es, eine alternative Arbeitsplatte, ein alternatives Verfahren zur Herstellung einer Arbeitsplatte und eine alternative Kücheneinrichtungsanordnung bereitzustellen.

Die Erfindung löst die vorstehenden genannten Aufgaben in einer Ausführungsform mit einer Kücheneinrichtungsanordnung gemäß Anspruch 1

Die Erfindung löst die vorstehenden genannten Aufgaben in einer Ausführungsform ebenfalls durch ein Verfahren zur Herstellung einer Arbeitsplatte für eine Kücheneinrichtungsanordnung gemäß einem der Ansprüche 1-11 gemäß Anspruch 12.

Unter dem Begriff "Bereich" ist jegliche null-, ein-, zwei- oder dreidimensionale Fläche, Region, Ausschnitt, Volumen, Linie, Punkt oder dergleichen zu verstehen.

Unter der Formulierung "basierend auf Grünglas" in Bezug auf den Begriff "Substrat" ist insbesondere in der Beschreibung, vorzugsweise in den Ansprüchen ein Substrat zu verstehen, welches Grünglas aufweist, wobei das Grünglas des Substrats entweder noch nicht keramisiert ist oder das Grünglas des Substrats bereits in teilweise keramisierter Form vorliegt. Mit anderen Worten ist das Substrat noch nicht vollständig zu einem gewünschten Endprodukt wie beispielsweise eine Keatit-Mischkristall-Glaskeramik, keramisiert.

Unter dem Begriff "Länge in Förderrichtung" ist insbesondere jene Erstreckung, Abmessung etc. des Substrats zu verstehen, welche parallel zur vorgesehenen Durchlaufrichtung, Transportrichtung, Vorschubrichtung etc. des Durchlaufofens verläuft oder orientiert ist.

Der Begriff "L*-a*-b*-Farbraum" bezeichnet insbesondere den Farbraum gemäß EN ISO 11664-4:2011 (Deutsche Fassung von: "Farbmetrik - Teil 4: CIE 1976 L; a; b; Farbenraum (ISO 11664-4:2008)").

Unter dem Begriff "Gruppe" mit Bezug auf den Begriff "Kammer" sind eine oder mehrere Kammern zu verstehen.

Einer der damit erzielten Vorteile ist, dass auf einfache und kostengünstige Weise eine Arbeitsplatte zur Verfügung gestellt werden kann, die eine hohe Homogenität in der Transmission im sichtbaren und/oder im Infrarotbereich aufweist. Darüber hinaus ist diese optisch besonders ansprechend, da Farbtonunterschiede in unterschiedlichen Bereichen der Platte nicht mehr wahrnehmbar sind. Ein weiterer Vorteil ist, dass damit Beschriftungen für Funktionselemente oder dergleichen besonders gut wahrnehmbar sind, selbst wenn diese einen ähnlichen Grundfarbton wie die Arbeitsplatte aufweisen. Gleichzeitig ist die Auswahl an möglichen Farben für die Beschriftung basierend auf dem Grundfarbton der Arbeitsplatte weniger eingeschränkt.

Weitere Merkmale, Vorteile und weitere Ausführungsformen der Erfindung sind im Folgenden beschrieben oder werden dadurch offenbar.

Gemäß einer vorteilhaften Weiterbildung beträgt der Farbeindrucksunterschied ΔE weniger als 0,25, insbesondere weniger als 0,2, vorzugsweise weniger als 0,13. Vorteil hiervon ist unter anderem, dass die Arbeitsplatte besonders homogen ausgebildet ist, insbesondere ein besonders homogener Farbeindruck erzielt wird, und damit eine gleichmäßige Transmission ermöglicht wird.

Gemäß einer weiteren vorteilhaften Weiterbildung beträgt der jeweilige Helligkeitswert L* von erstem und zweitem Bereich jeweils mehr als 65, vorzugsweise mehr als 80, insbesondere mehr als 90. Damit kann insbesondere eine Arbeitsplatte mit besonders hellem Farbeindruck bereitgestellt werden.

Gemäß einer weiteren vorteilhaften Weiterbildung betragen die Beträge der jeweiligen Grün-Rot-Parameter und/oder die jeweiligen Blau-Gelb-Parameter von erstem und zweitem Bereich weniger als 20. Damit kann eine Arbeitsplatte mit besonders hohem weißen Farbeindruck bereitgestellt werden. Der Grün-Rot-Parameter bezieht sich hierbei auf die Größe a* im L*-a*-b*-Farbsystem, der Blau-Gelb-Parameter auf die Größe b* im L*-a*-b*-Farbsystem und der Begriff "Betrag" ist hier im mathematischen Sinne zu verstehen.

Gemäß einer weiteren vorteilhaften Weiterbildung beträgt die Fläche der Arbeitsplatte mehr als 1,5 m$^2$, vorzugsweise mehr als 2,5 m$^2$. Damit wird eine besonders homogene Arbeitsplatte auch bei besonders großen Abmessungen bereitgestellt, insbesondere wird ein besonders homogener Farbeindruck für die Arbeitsplatte erzielt.

Gemäß einer weiteren vorteilhaften Weiterbildung beträgt die Härte der Oberfläche der Arbeitsplatte, gemessen als Knoop-Härte 0,1/20, mehr als 600, vorzugsweise mehr als 650, insbesondere mehr als 700. Damit wird ein effektiver Schutz gegen Kratzer in der Oberfläche der Arbeitsplatte bereitgestellt. Der Begriff "Knoop-Härte" bezeichnet hierbei die Eindruckhärte nach Knoop gemäß EN ISO 4545-1:2018 (Deutsche Fassung von: "Metallische Werkstoffe - Härteprüfung nach Knoop - Teil 1: Prüfverfahren (ISO 4545-1:2017)").

Gemäß einer weiteren vorteilhaften Weiterbildung beträgt die mittlere Biegefestigkeit der Arbeitsplatte mehr als 80 MPa, insbesondere mehr als 100 MPa, vorzugsweise mehr als 130 MPa, insbesondere mehr als 165 MPa. Damit wird die Handhabbarkeit insbesondere bei großen Arbeitsplatten verbessert. Der Begriff "Biegefestigkeit" bezeichnet hierbei die Biegefestigkeit gemäß DIN EN 1288-5:2000 (Deutsche Fassung von: "Glas im Bauwesen - Bestimmung der Biegefestigkeit von Glas - Teil 5: Doppelring-Biegeversuch an plattenförmigen Proben mit kleinen Prüfflächen; EN 1288-5:2000").

Gemäß einer weiteren vorteilhaften Weiterbildung beträgt der mittlere thermische Längenausdehnungskoeffizient in einem Temperaturbereich zwischen 20 °C und 700 °C, weniger als 1,1*10$^{-6}$/K, insbesondere weniger als 1*10$^{-6}$/K. Damit wird eine besonders temperaturunabhängige Arbeitsplatte hinsichtlich ihrer Abmessungen bereitgestellt, was die Handhabung der Arbeitsplatte und die Langlebigkeit der Arbeitsplatte verbessert.

Gemäß einer weiteren vorteilhaften Weiterbildung weist die Arbeitsplatte bezogen auf eine Dicke der Arbeitsplatte von 4 mm eine IR-Transmission im Wellenlängenbereich zwischen 2300 nm und 2500 nm von mehr als 50 % vorzugsweise mehr als 60 %, insbesondere mehr als 70 %, und/oder im Wellenlängenbereich zwischen 3500 nm und 3700 nm von mehr als 50 %, vorzugsweise mehr als 60 %, insbesondere mehr als 70 % auf. Vorteil hiervon ist eine besonders effektive Transmission von Wärme im genannten Wellenlängenbereich durch die Arbeitsplatte, sodass beispielsweise unter der Arbeitsplatte angeordnete Heizelemente stromsparend betrieben werden können.

Die Arbeitsplatte ist aus einem Substrat umfassend Lithium, Aluminium und Silizium, mit Keatit als Hauptkristallphase, hergestellt. Dies ermöglicht eine einfach herzustellende, kostengünstige und gleichzeitig flexibel einsetzbare Arbeitsplatte.

Gemäß einer weiteren vorteilhaften Weiterbildung weist das Substrat eine Eigenfarbe zur Bereitstellung des Farbeindrucks der Arbeitsplatte auf. Mit anderen Worten müssen keine Farbstoffe bei der Herstellung der Arbeitsplatte zugesetzt werden, das Substrat ist somit fremdfarbstoffzusatzfrei, was die Herstellung der Arbeitsplatte vereinfacht.

Gemäß einer weiteren vorteilhaften Weiterbildung weist die Arbeitsplatte mindestens eine Beschichtung zur Homogenisierung des Farbeindrucks auf, insbesondere zwei Beschichtungen. Damit werden gegebenenfalls visuell nicht wahrnehmbare Unterschiede in der Transmission bzw. im Farbeindruck ausgeglichen bzw. minimiert.

Gemäß einer weiteren vorteilhaften Weiterbildung des Verfahrens wird der Durchlaufofen mit fünf verschiedenen Gruppen von Kammern bereitgestellt. Damit ist ein einfacher Aufbau bei gleichzeitiger zuverlässiger Steuerung der Hauptkammern des Durchlaufofens möglich.

Als Dauer wird für die zweite Zeitspanne weniger als 50 % der Dauer der ersten Zeitspanne gewählt, wobei die erste Haltetemperatur zwischen 700 °C und 850 °C bereitgestellt und wobei die zweite Haltetemperatur zwischen 950 °C und 1200 °C bereitgestellt wird. Vorteil hiervon ist, dass damit eine hohe, insbesondere farbliche, Homogenität der Arbeitsplatte erzielt wird.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen in schematischer Form

Figur 1    eine Arbeitsplatte gemäß einer Ausführungsform der vorliegenden Erfindung;

Figur 2    Schritte eines Verfahrens zur Herstellung einer Arbeitsplatte gemäß einer Ausführungsform der vorliegenden Erfindung;

Figur 3    ein Durchlaufofen im Querschnitt zur Durchführung eines Verfahrens gemäß einer Ausführungsform der vorliegenden Erfindung; und

Figur 4    ein Temperatur-Zeit-Diagramm von Schritten eines Verfahrens gemäß einer Ausführungsform der vorliegenden Erfindung.

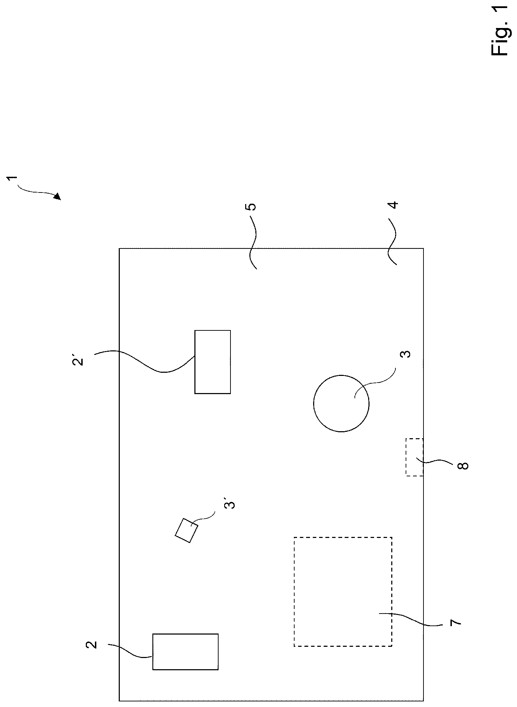

Figur 1 zeigt eine Arbeitsplatte gemäß einer Ausführungsform der vorliegenden Erfindung.

Im Detail ist in Figur 1 eine rechteckförmige Arbeitsplatte 1 gezeigt. Die Arbeitsplatte 1 kann auch jede andere Form aufweisen, beispielsweise trapezförmig, dreiecksförmig, kreisförmig, ellipsenförmig ausgebildet sein. Auf der Arbeitsplatte 1 sind vier beliebig wählbare Bereiche 2, 2'; 3, 3' gezeigt. Jeder der Bereiche 2, 2', 3, 3' weist einen individuellen Farbeindruck im L\*-a\*-b\*-Farbraum auf. Der Farbeindrucksunterschied ΔE zwischen zwei beliebigen Bereichen der vier Bereiche 2, 2', 3, 3' beträgt dabei weniger als 1,5 gemäß der Formel

$$\Delta E = \sqrt{(L_1^* - L_2^*)^2 + (a_1^* - a_2^*)^2 + (b_1^* - b_2^*)^2}$$, wobei mit den Indices 1 und 2 jeweils die unterschiedlichen Werte für die ausgewählten Bereiche gemäß dem L\*-a\*-b\*-Farbraum bezeichnet sind. Werden die Abmessungen der Bereiche groß gewählt, können entsprechende Mittelwerte für den Farbeindruck L\*, a\*, b\* des jeweiligen Bereichs herangezogen werden.

Des Weiteren weist die Arbeitsplatte 1 eine Fläche 4 mit einer Größe von 2 m$^2$ auf und hat eine Dicke von 4 mm. Als Substrat für die Arbeitsplatte 1 wird ein glaskeramisches Material vom Li-Al-Si-Typ mit hellweißer Anmutung verwendet. Dieses weist eine Biegefestigkeit von im Mittel 144 MPa auf. Die Arbeitsplatte 1 weist weiterhin einen mittleren thermischen Längenausdehnungskoeffizienten im Bereich zwischen 20 °C und 700 °C von 1,05 $10^{-6}$ /K auf, wodurch eine hohe thermische Stabilität insbesondere im Bereich hoch temperierter Kochzonen gegeben ist. Die Keramisierung erfolgt bei einer Maximaltemperatur von über 1000 °C. Die Farbwerte der Arbeitsplatte 1 sind dabei L\* = 95,4, a\* = -0,44 und b\* = -0,30. Die Farbhomogenität über die Gesamtfläche der Arbeitsplatte beträgt ΔE = 0,12 und die Härteprüfung nach Knoop ergibt für die Arbeitsplatte einen Wert von 619 HK 0,1/20. Die Infrarottransmission beträgt bei einer Wellenlänge von 3500 nm 60,5 %, bezogen auf eine Dicke der Arbeitsplatte von 4,0 mm.

In einer weiteren nicht dargestellten Ausführungsform weist die Arbeitsplatte 1 folgende Eigenschaften auf: Als Substrat für die Arbeitsplatte wird ein glaskeramisches Material vom Li-Al-Si-Typ mit hellgrauweißer Anmutung verwendet. Die mittlere Biegefestigkeit der Arbeitsplatte beträgt im Mittel 160 MPa, der mittlere thermische Längenausdehnungskoeffizient beträgt im Bereich zwischen 20 °C und 700 °C 0,96·$10^{-6}$/K. Die Keramisierung erfolgt wieder bei einer Maximaltemperatur von über 1000 °C. Die Farbwerte der Arbeitsplatte sind L\* = 71,5, a\* = -5,3 und b\* = -12,5. Die Farbhomogenität über die Gesamtfläche der Arbeitsplatte beträgt ΔE = 0,15.

In einer weiteren nicht dargestellten Ausführungsform weist die Arbeitsplatte 1 folgende Eigenschaften auf. Als Substrat für die Arbeitsplatte wird ein glaskeramisches Material vom Li-Al-Si-Typ mit hellbeigefarbener Anmutung verwendet. Die Biegefestigkeit nach DIN EN 1288-5 beträgt im Mittel 89 MPa, der mittlere thermische Längenausdehnungskoeffizient im Bereich zwischen 20 °C und 700 °C liegt bei 0,93·$10^{-6}$/K. Die Keramisierung erfolgt bei einer Maximaltemperatur von über 1000 °C. Die Farbwerte der Arbeitsplatte sind L\* = 87,3, a\* = -2,2 und b\* = 4,0. Die Farbhomogenität über die Gesamtfläche beträgt ΔE = 0,23. Die Infrarottransmission beträgt beispielsweise bei einer Wellenlänge von 2400 nm 72,8 % und bei einer Wellenlänge von 3600 nm 62,9%, bezogen auf eine Dicke der Arbeitsplatte von 4,0 mm.

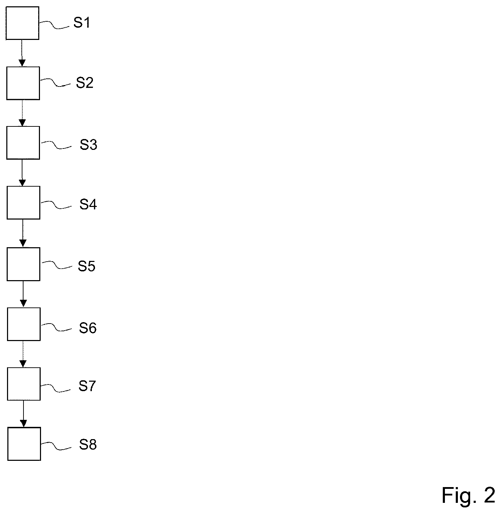

Figur 2 zeigt Schritte eines Verfahrens zur Herstellung einer Arbeitsplatte gemäß einer Ausführungsform der vorliegenden Erfindung.

Im Detail sind in Figur 2 Schritte eines Verfahrens zur Herstellung einer Arbeitsplatte gemäß einem der Ansprüche 1-11 gezeigt. Das Verfahren umfasst insbesondere einen Keramisierungsprozess für Grünglas.

In einem ersten Schritt S1 erfolgt ein Bereitstellen eines Substrats basierend auf Grünglas, hier in Form von eingeschmolzenem Grünglas. Das zu keramisierende Grünglas und/oder das keramisierte Produkt, aus dem die Arbeitsplatte hergestellt wird, weist insbesondere eine Zusammensetzung aus dem Bereich:

60 - 73,0 Gew.-% $SiO_2$,
15 - 25,0 Gew.-% $Al_2O_3$,
2,0 - 5,0 Gew.-% $Li_2O$,
0 - 5,0 Gew.-% $CaO + SrO + BaO$,
0 - 5,0 Gew.-% $TiO_2$,
0 - 5,0 Gew.-% $ZrO_2$,
0 - 4,0 Gew.-% $ZnO$
0 - 3,0 Gew.-% $Sb_2O_3$,
0 - 3,0 Gew.-% $MgO$,
0 - 3,0 Gew.-% $SnO_2$
0 - 2,0 Gew.-% $P_2O_5$,
0 - 1,5 Gew.-% $As_2O_3$,
0 - 1,2 Gew.-% $Na_2O + K_2O$,

auf, wobei die jeweiligen Anteile vorzugsweise innerhalb der nachfolgend angegebenen Bereiche liegen,

0 - 1,0 Gew.-% $Na_2O$,
0 - 0,5 Gew.-% $K_2O$.

Da das Verfahren auf einen weiten Zusammensetzungsbereich anwendbar ist, können beispielsweise auch Glaskeramik-Zusammensetzungen aus Umschmelzphasen hergestellt werden. Hier können dann auch Komponenten des oben angegebenen Zusammensetzungsbereiches vollständig fehlen. Eine Vorrichtung kann hierfür vorgesehen sein, die das zu keramisierende Grünglas bereitstellt. Insbesondere ist diese Vorrichtung zum Einschmelzen und Formen des Grünglases ausgebildet.

In einem weiteren Schritt S2 erfolgt ein Bereitstellen eines Durchlaufofens mit einer Mehrzahl von Gruppen von Kammern auf, die hintereinander entlang einer Förderrichtung des Substrats angeordnet sind, wobei jede Gruppe zumindest eine Kammer aufweist. Der Durchlaufofen dient hier insbesondere zum Keramisieren des Ausgangsproduktes Grünglas. Der Durchlaufofen kann allerdings auch dazu dienen, eine bereits niedriger keramisierte HQMK-Glaskeramik zum Endprodukt in Form einer KMK-Glaskeramik weiter zu keramisieren. Der Durchlaufofen kann ausgebildet sein, so dass der gesamte Keramisierungsprozess innerhalb von 0,5 bis 4 Stunden durchgeführt werden kann.

In einem weiteren Schritt S3 erfolgt ein Einbringen des bereitgestellten Substrats in den Durchlaufofen zum Durchlaufen desselben in der Förderrichtung derart, dass das Substrat in Förderrichtung mit einer Länge bereitgestellt wird, die weniger als 75 %, vorzugsweise weniger als 65 %, insbesondere weniger als 60 %, vorzugsweise weniger als 50 % der Länge in Förderrichtung zumindest einer der Kammern des Durchlaufofens, vorzugsweise jeder der Kammern des Durchlaufofens, beträgt.

In einem weiteren Schritt S4 erfolgt ein Erhöhen der Temperatur des Substrats bis zu einer ersten Haltetemperatur über eine erste Zeitpanne, insbesondere in einer ersten Gruppe von Kammern.

In einem weiteren Schritt S5 erfolgt ein Halten der ersten Haltetemperatur für eine zweite Zeitspanne, insbesondere in einer zweiten Gruppe von Kammern.

In einem weiteren Schritt S6 erfolgt ein weiteres Erhöhen der Temperatur bis zu einer zweiten Haltetemperatur über eine dritte Zeitspanne, insbesondere in einer dritten Gruppe von Kammern.

In einem weiteren Schritt S7 erfolgt ein Halten der zweiten Haltetemperatur für eine vierte Zeitspanne, insbesondere in einer vierten Gruppe von Kammern.

In einem weiteren Schritt S8 erfolgt ein Abkühlen des Substrats, insbesondere in einer fünften Gruppe von Kammern oder außerhalb des Durchlaufofens zur Bildung der Arbeitsplatte.

Eine Gruppe von Kammern umfasst dabei eine oder mehrere Kammern.

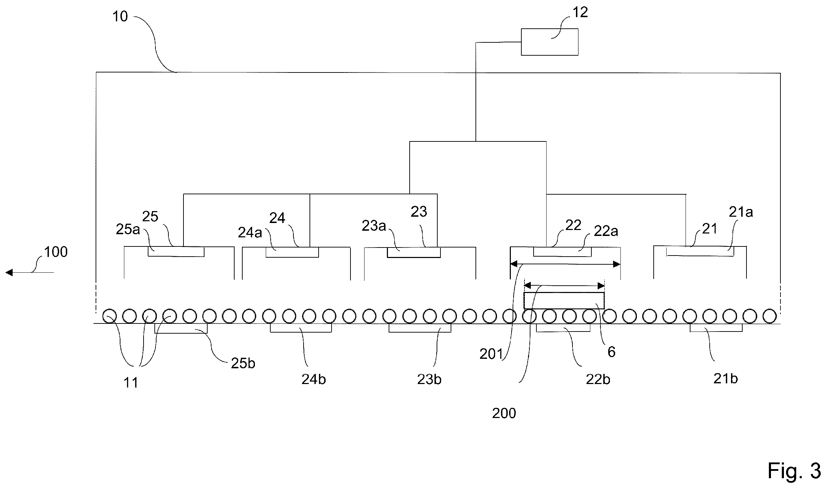

Figur 3 zeigt einen Durchlaufofen im Querschnitt zur Durchführung eines Verfahrens gemäß einer Ausführungsform der vorliegenden Erfindung.

Im Detail ist in Figur 3 ein Durchlaufofen 10 gezeigt. Der Durchlaufofen 10 weist dabei fünf separate Gruppen 21, 22, 23, 24, 25 auf, wobei jede Gruppe eine oder mehrere Kammern aufweist. In der Fig. 3 umfasst jede Gruppe 21, 22, 23, 24, 25 - wie dies schematisch dargestellt ist - jeweils nur eine Kammer. Im Folgenden können deshalb die Begriffe "Kammer" und "Gruppe" insbesondere im Zusammenhang mit der Fig. 3 synonym verwendet werden.

Jede Kammer innerhalb der Gruppen 21, 22, 23, 24, 25 ist separat auf eine bestimmte Temperatur aufheizbar und/oder (ab)kühlbar. Zumindest eine Gruppe 21, 22, 23, 24, 25 des Durchlaufofens 10 ist für die Volumenkristallisation des Grünglases und/oder des HQMK-Glaskeramik eingerichtet und weist insbesondere Heizeinrichtungen 21a, 21b, 22a, 22b, 23a, 23b, 24a, 24b, 25a, 25b auf, die das Erhitzen des zu keramisierenden Grünglases und/oder der HQMK-Glaskeramik auf 750 °C bis 1250 °C erlauben.

Darüber hinaus ist eine Mess- und Regeleinrichtung 12 vorgesehen, die zur Steuerung des Durchlaufofens 10 ausgebildet ist, insbesondere zur Detektion von Temperaturveränderungen des keramisierenden Grünglases und/oder der HQMK-Glaskeramik. Die Mess- und Regeleinrichtung 12 passt dann die Temperatur des Durchlaufofens 10, beispielsweise innerhalb einer Sekunde, entsprechend an. Eine schnelle Reaktionszeit ist insbesondere für eine effektive Kontrolle über den exothermen Keramisierungsprozess vorteilhaft.

Des Weiteren wird über eine Fördereinrichtung 11 ein Substrat 6 in Förderrichtung 100 durch den Durchlaufofen 10 befördert, wobei insbesondere die Fördereinrichtung 11 Rollen zum Transportieren und/oder Lagern des Substrats 6 aufweist. Das Substrat 6 kann dabei auch in einem geeigneten Transportbehältnis (in Fig. 3 nicht dargestellt) transportiert werden, beispielsweise auf einer Trägerplatte, einer Wanne oder dergleichen. Das Substrat 6 weist dabei eine Länge 200 in Förderrichtung 100 auf, die weniger als 70 % der Länge einer oder mehrerer der Kammern der Gruppen 21, 22, 23, 24, 25 beträgt. Wirken die Kammern von einer Gruppe 21, 22, 23, 24, 25 jeweils zeitlich in gleicher Weise auf das Substrat 6, kann die Unterteilung in separate Kammern innerhalb der jeweiligen Gruppe 21, 22, 23, 24, 25 entfallen und das Substrat 6 kann dann eine Länge 200 in Förderrichtung 100 aufweisen, die weniger als 70 % der Länge der Gesamtlänge der Kammern der jeweiligen Gruppe beträgt. Sind die Kammern unterschiedlich lang, kann das Substrat 6 dann eine Länge 200 in Förderrichtung 100 aufweisen, welche sich an der kürzesten aller Kammern orientiert.

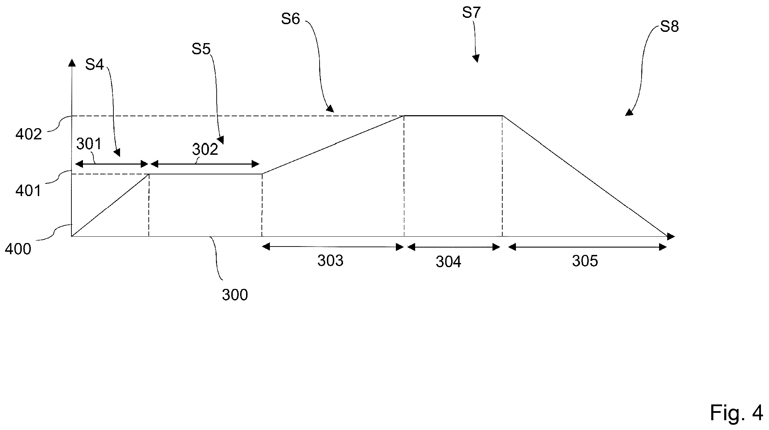

Figur 4 zeigt ein Temperatur-Zeit-Diagramm von Schritten eines Verfahrens gemäß einer Ausführungsform der vorliegenden Erfindung.

Im Detail ist in Figur 4 der zeitliche Verlauf der Temperatur 400 gezeigt, wenn das Substrat 6 den Durchlaufofen 10 gemäß Figur 3 in Förderrichtung 100 passiert. Ausgehend von der Raumtemperatur wird zunächst die Temperatur über eine Zeit 301 auf eine erste Haltetemperatur 401 erhöht, insbesondere mit einer Rate zwischen 5 °C/min und 40 °C/min, insbesondere mit einer Rate zwischen 10 °C/min und 30 °C/min. Die erste Haltetemperatur 401 kann dabei zwischen 700 °C und 850 °C, insbesondere zwischen 725 °C und 800 °C liegen. Anschließend wird für eine erste Haltezeit 302 die erste Haltetemperatur 401 gehalten. Die erste Haltezeit 302 kann dabei zwischen 5 min und 90 min, insbesondere zwischen 10 min und 60 min liegen. Anschließend wird die Temperatur des Substrats 6 über eine Zeit 303 ausgehend von der ersten Haltetemperatur 401 auf eine zweite, höhere Haltetemperatur 402 erhöht, insbesondere mit einer Rate zwischen 5 °C/min und 40 °C/min, insbesondere mit einer Rate zwischen 10 °C/min und 30 °C/min. Die zweite Haltetemperatur 402 kann dabei zwischen 950 °C und 1200 °C, insbesondere zwischen 980 °C und 1120 °C liegen. Diese zweite Haltetemperatur 402 wird für eine gewisse zweite Haltezeit 304 gehalten. Die zweite Haltezeit 305 kann dabei zwischen 5 min und 45 min, insbesondere zwischen 5 min und 25 min liegen. Anschließend erfolgt ein Abkühlen des Substrats 6 auf Raumtemperatur für eine bestimmte Zeit 305 zur Bereitstellung einer Arbeitsplatte 1. Ebenfalls in Figur 4 sind die zur Figur 2 korrespondierenden Verfahrensschritte S4-S8 der Figur 2 den jeweiligen Zeitabschnitten 301-305 der Figur 4 zugeordnet.

Zusammenfassend weist zumindest eine der Ausführungsformen der Erfindung zumindest einen der folgenden Vorteile auf:

- Hohe Homogenität des Farbeindrucks.
- Hohe Homogenität der Transmission im visuellen und/oder Infrarotbereich.
- Kostengünstige Herstellung.
- Einfache Herstellung.
- Hohe Lebensdauer.

**Patentansprüche**

1. Kücheneinrichtungsanordnung, umfassend eine Glaskeramik-Arbeitsplatte (1), zumindest ein Energieübertragungselement (7) zum Kochen, insbesondere ein unterhalb der Arbeitsplatte (1) angeordnetes Heizelement und/oder ein Kommunikationselement (8) zum Austausch von Daten, insbesondere mit einer auf oder in der Umgebung der Glaskeramik-Arbeitsplatte (1) angeordneten Vorrichtung, wobei die Fläche (4) der Arbeitsplatte (1) mehr als 1,25 m$^2$ beträgt und wobei die Arbeitsplatte (1) aus einem Substrat (6) umfassend Lithium, Aluminium und Silizium mit Keatit als Hauptkristallphase, hergestellt ist und wobei ein erster beliebig auswählbarer Bereich (2, 2') der Arbeitsplatte (1) einen Farbeindruck im L*-a*-b*-Farbraum gemäß $L_1^*$, $a_1^*$, $b_1^*$ aufweist und ein zweiter beliebig auswählbarer Bereich (3, 3') einen Farbeindruck im L\*-a\*-b\*-Farbraum gemäß $L_2^*$, $a_2^*$, $b_2^*$ aufweist,
**dadurch gekennzeichnet, dass**
der Farbeindrucksunterschied ΔE im L\*-a\*-b\*-Farbraum zwischen dem ersten und zweiten Bereich (2, 2', 3, 3') der Arbeitsplatte (1) gemäß der Formel $\Delta E = \sqrt{(L_1^* - L_2^*)^2 + (a_1^* - a_2^*)^2 + (b_1^* - b_2^*)^2}$ weniger als 2,0, vorzugsweise weniger als 1,0 beträgt.

2. Kücheneinrichtungsanordnung gemäß Anspruch 1, **dadurch gekennzeichnet, dass** der Farbeindrucksunterschied ΔE weniger als 0,25, insbesondere weniger als 0,2, vorzugsweise weniger als 0,13 beträgt.

3. Kücheneinrichtungsanordnung gemäß einem der Ansprüche 1-2, **dadurch gekennzeichnet, dass** der jeweilige Helligkeitswert L\* vom ersten und zweiten Bereich jeweils mehr als 65, vorzugsweise mehr als 80, insbesondere mehr als 90, beträgt.

4. Kücheneinrichtungsanordnung gemäß einem der Ansprüche 1-3, **dadurch gekennzeichnet, dass** die Beträge der jeweiligen Grün-Rot-Parameter $a_1^*$, $a_2^*$ und/oder die jeweiligen Blau-Gelb-Parameter $b_1^*$, $b_2^*$ von erstem und zweitem Bereich weniger als 20 betragen.

5. Kücheneinrichtungsanordnung gemäß einem der Ansprüche 1-4, **dadurch gekennzeichnet, dass** die Fläche (4) der Arbeitsplatte (1) mehr als 1,5 m², vorzugsweise mehr als 2,5 m² beträgt.

6. Kücheneinrichtungsanordnung gemäß einem der Ansprüche 1-5, **dadurch gekennzeichnet, dass** die Härte der Oberfläche (5) der Arbeitsplatte (1), gemessen als Knoop-Härte 0,1/20, mehr als 600, vorzugsweise mehr als 650, insbesondere mehr als 700 beträgt.

7. Kücheneinrichtungsanordnung gemäß einem der Ansprüche 1-6, **dadurch gekennzeichnet, dass** die mittlere Biegefestigkeit der Arbeitsplatte (1) mehr als 80 MPa, insbesondere mehr als 100 MPa, vorzugsweise mehr als 130 MPa, insbesondere mehr als 165 MPa beträgt.

8. Kücheneinrichtungsanordnung gemäß einem der Ansprüche 1-7, **dadurch gekennzeichnet, dass** der mittlere thermische Längenausdehnungskoeffizient in einem Temperaturbereich zwischen 20 °C und 700 °C weniger als $1,1 \cdot 10^{-6}$/K, insbesondere weniger als $1 \cdot 10^{-6}$/K, beträgt.

9. Kücheneinrichtungsanordnung gemäß einem der Ansprüche 1-8, **dadurch gekennzeichnet, dass** die Arbeitsplatte (1) bezogen auf eine Dicke der Arbeitsplatte von 4 mm eine IR-Transmission im Wellenlängenbereich zwischen 2300 nm und 2500 nm von mehr als 50 % vorzugsweise mehr als 60 %, insbesondere mehr als 70 %, und/oder im Wellenlängenbereich zwischen 3500 nm und 3700 nm von mehr als 50 %, vorzugsweise mehr als 60 %, insbesondere mehr als 70 % aufweist.

10. Kücheneinrichtungsanordnung gemäß einem der Ansprüche 1-9, **dadurch gekennzeichnet, dass** das Substrat (6) eine Eigenfarbe zur Bereitstellung des Farbeindrucks der Arbeitsplatte aufweist.

11. Kücheneinrichtungsanordnung gemäß einem der Ansprüche 1-10, **dadurch gekennzeichnet, dass** die Arbeitsplatte (1) zumindest eine Beschichtung zur Homogenisierung des Farbeindrucks aufweist, insbesondere zwei Beschichtungen.

12. Verfahren zur Herstellung einer Arbeitsplatte für eine Kücheneinrichtungsanordnung gemäß einem der Ansprüche 1-11, **gekennzeichnet durch** die Schritte

- Bereitstellen (S1) eines Substrats (6) basierend auf Grünglas, insbesondere in Form von eingeschmolzenem Grünglas oder einer aus diesem Grünglas hergestellten Glaskeramik, vorzugsweise einer HQMK-Glaskeramik,
- Bereitstellen (S2) eines Durchlaufofens (10) mit einer Mehrzahl von Gruppen (21, 22, 23, 24, 25) von Kammern, die hintereinander entlang einer Förderrichtung (100) des Substrats (6) angeordnet sind, und wobei jede der Gruppen (21, 22, 23, 24, 25) zumindest eine Kammer umfasst,
- Einbringen (S3) des bereitgestellten Substrats (6) in den Durchlaufofen (10) zum Durchlaufen desselben in der Förderrichtung (100) derart, dass das Substrat (6) mit einer Länge (200) in Förderrichtung (100) bereitgestellt wird, die weniger als 75 %, vorzugsweise weniger als 65 %, insbesondere weniger als 60 %, vorzugsweise weniger als 50 % der Länge (201) in Förderrichtung (100) zumindest einer der Kammern des Durchlaufofens (10) beträgt,

- Erhöhen (S4) der Temperatur (400) des Substrats (6) bis zu einer ersten Haltetemperatur (401) über eine erste Zeitpanne (301), insbesondere in einer ersten Gruppe (21) von Kammern,
- Halten (S5) der ersten Haltetemperatur (401) für eine zweite Zeitspanne (302), insbesondere in einer zweiten Gruppe (22) von Kammern,
- Weiteres Erhöhen (S6) der Temperatur (400) bis zu einer zweiten Haltetemperatur (402) über eine dritte Zeitpanne (303), insbesondere in einer dritten Gruppe (23) von Kammern,
- Halten (S7) der zweiten Haltetemperatur (402) für eine vierte Zeitspanne (304), insbesondere in einer vierten Gruppe (24) von Kammern, und
- Abkühlen (S8) des Substrats (6) zur Bildung der Arbeitsplatte (1), insbesondere in einer in einer fünften Gruppe (25) von Kammern oder außerhalb des Durchlaufofens (10),

wobei als Dauer für die zweite Zeitspanne (302) weniger als 50 % der Dauer der ersten Zeitspanne (301) gewählt wird und wobei die erste Haltetemperatur (401) zwischen 700 °C und 850 °C bereitgestellt wird und wobei die zweite Haltetemperatur (402) zwischen 950 °C und 1200 °C bereitgestellt wird, und wobei der Durchlaufofen (10) mit fünf Gruppen (21, 22, 23, 24, 25) von Kammern bereitgestellt wird.

**Claims**

1. Kitchen equipment arrangement comprising a glass ceramic worktop (1), at least one energy transmission element (7) for cooking, in particular a heating element which is arranged below the worktop (1) and/or a communication element (8) for exchanging data, in particular having an apparatus which is arranged on or in the environment of the glass ceramic worktop (1), wherein the surface (4) of the worktop (1) is more than 1.25 m$^2$, and wherein the worktop (1) is produced from a substrate (6) comprising lithium, aluminium and silicon with keatite as a main crystal phase, and wherein a first freely selectable region (2, 2') of the worktop (1) has a colour impression in the L\*-a\*-b\* colour spectrum according to $L_1^*$, $a_1^*$, $b_1$ and a second freely selectable region (3, 3') has a colour impression in the L\*-a\*-b\* colour spectrum according to $L_2^*$, $a_2^*$, $b_2$,
aracterised in that
the colour impression difference ΔE in the L\*-a\*-b\* colour spectrum between the first and the second region (2, 2'; 3, 3') of the worktop (1) according to the formula

$$\Delta E \sqrt{(L_1^* - L_2^*)^2 + (a_1^* - a_2^*)^2 + (b_1^* - b_2^*)^2}$$

is less than 2.0, preferably less than 1.0.

2. Kitchen equipment arrangement according to claim 1, **characterised in that** the colour impression difference ΔE is less than 0.25, in particular less than 0.2, preferably less than 0.13.

3. Kitchen equipment arrangement according to any one of claims 1 to 2, **characterised in that** the respective brightness value L\* of the first and second region is in each case more than 65, preferably more than 80, in particular more than 90.

4. Kitchen equipment arrangement according to any one of claims 1 to 3, **characterised in that** the values of the respective green/red parameter $a_1^*$, $a_2^*$ and/or the respective blue/yellow parameter $b_1^*$, $b_2^*$ of the first and second range are less than 20.

5. Kitchen equipment arrangement according to any one of claims 1 to 4, **characterised in that** the surface-area (4) of the worktop (1) is more than 1.5 m$^2$, preferably more than 2.5 m$^2$.

6. Kitchen equipment arrangement according to any one of claims 1 to 5, **characterised in that** the hardness of the surface (5) of the worktop (1), measured as a Knoop hardness 0.1/20, is more than 600, preferably more than 650, in particular more than 700.

7. Kitchen equipment arrangement according to any one of claims 1 to 6, **characterised in that** the mean flexural strength of the worktop (1) is more than 80 MPa, in particular more than 100 MPa, preferably more than 130 MPa, in particular more than 165 MPa.

8. Kitchen equipment arrangement according to any one of claims 1 to 7, **characterised in that** the mean thermal length expansion coefficient is, in a temperature range between 20°C and 700°C, less than $1.1*10^{-6}$/K, in particular less than $1*10^{-6}$/K.

9. Kitchen equipment arrangement according to any one of claims 1 to 8, **characterised in that** the worktop (1), with respect to a thickness of the worktop of 4 mm, has an IR transmission in the wavelength range between 2300 nm and 2500 nm of more than 50%, preferably more than 60%, in particular more than 70%, and/or in the wavelength range between 3500 nm and 3700 nm of more than 50%, preferably more than 60%, in particular more than 70%.

10. Kitchen equipment arrangement according to any one of claims 1 to 9, **characterised in that** the substrate (6) has an intrinsic colour for providing the colour impression of the worktop.

11. Kitchen equipment arrangement according to any one of claims 1 to 10, **characterised in that** the worktop (1) has at least one coating for homogenisation of the colour impression, in particular two coatings.

12. Method for producing a worktop for a kitchen equipment arrangement according to any one of claims 1 to 11, **characterised by** the steps of:

- providing (S1) a substrate (6) based on green glass, in particular in the form of molten green glass or a glass ceramic material produced from this green glass, preferably an HQMK glass ceramic material,
- providing (S2) a continuous furnace (10) having a plurality of groups (21, 22, 23, 24, 25) of chambers which are arranged one behind the other in a conveying direction (100) of the substrate (6), and wherein each of the groups (21, 22, 23, 24, 25) comprises at least one chamber,
- introducing (S3) the provided substrate (6) into the continuous furnace (10) in order to pass through it in the conveying direction (100) in such a manner that the substrate (6) is provided having a length (200) in the conveying direction (100) which is less than 75%, preferably less than 65%, in particular less than 60%, preferably less than 50% of the length (201) in the conveying direction (100) of at least one of the chambers of the continuous furnace (10),
- increasing (S4) the temperature (400) of the substrate (6) up to a first holding temperature (401) over a first period of time (301), in particular in a first group (21) of chambers,
- maintaining (S5) the first holding temperature (401) for a second period of time (302), in particular in a second group (22) of chambers,
- further increasing (S6) the temperature (400) up to a second holding temperature (402) over a third period of time (303), in particular in a third group (23) of chambers,
- maintaining (S7) the second holding temperature (402) for a fourth period of time (304), in particular in a fourth group (24) of chambers, and
- cooling (S8) the substate (6) in order to form the worktop (1), in particular in a fifth group (25) of chambers or outside the continuous furnace (10),

wherein as a duration for the second period of time (302) less than 50% of the duration of the first period of time (301) is selected and wherein the first holding temperature (401) is provided between 700°C and 850°C and wherein the second holding temperature (402) is provided between 950°C and 1200°C, and wherein the continuous furnace (10) is provided with five groups (21, 22, 23, 24, 25) of chambers.

**Revendications**

1. Disposition d'appareils de cuisine comprenant un plan de travail en vitrocéramique (1), au moins un élément de transmission d'énergie (7) pour cuisiner, plus particulièrement un élément chauffant disposé en dessous du plan de travail (1) et/ou un élément de communication (8) pour l'échange de données, plus particulièrement avec un dispositif disposé sur ou à proximité du plan de travail en vitrocéramique, dans laquelle la superficie (4) du plan de travail (1) représente plus de 1,25 m² et dans laquelle le plan de travail (1) est constitué d'un substrat (6) contenant du lithium, de l'aluminium et du silicium avec de la kéatite en tant que phase cristalline principale et dans laquelle une première zone sélectionnable de manière quelconque (2, 2') du plan de travail (1) présente une impression en couleurs dans l'espace colorimétrique L\*-a\*-b\* selon $L_1^*$, $a_1^*$, $b_1^*$ et une deuxième zone sélectionnable de manière quelconque (3, 3') présente une impression en couleurs dans l'espace colorimétrique L*-a*-b* selon $L_2^*$, $a_2^*$, $b_2^*$,

**caractérisée en ce que**

la différence d'impression en couleurs ∆E dans l'espace colorimétrique L*-a*-b* entre la première et la deuxième zone (2, 2' ; 3, 3') du plan de travail (1) selon la formule $\Delta E = \sqrt{(L_1^* - L_2^*)^2 + (a_1^* - a_2^*)^2 + (b_1^* - b_2^*)^2}$ représente moins de 2,0, de préférence moins de 1,0.

2. Disposition d'appareils de cuisine selon la revendication 1, **caractérisée en ce que** la différence d'impression en couleurs ∆E représente moins de 0,25, plus particulièrement moins de 0,2, de préférence moins de 0,13.

3. Disposition d'appareils de cuisine selon l'une des revendications 1 à 2, **caractérisée en ce que** la valeur de luminosité L* de la première et de la deuxième zone représente respectivement plus de 65, de préférence plus de 80, plus particulièrement plus de 90.

4. Disposition d'appareils de cuisine selon l'une des revendications 1 à 3, **caractérisée en ce que** les valeurs des paramètres vert-rouge respectifs $a_1^*$, $a_2^*$ et/ou les valeurs bleu-jaune respectifs $b_1^*$, $b_2^*$ de la première et de la deuxième zone représentent moins de 20.

5. Disposition d'appareils de cuisine selon l'une des revendications 1 à 4, **caractérisée en ce que** la superficie (4) du plan de travail (1) représente plus de 1,5 m$^2$, de préférence plus de 2,5 m$^2$.

6. Disposition d'appareils de cuisine selon l'une des revendications 1 à 5, **caractérisée en ce que** la dureté de la surface (5) du plan de travail (1), mesurée en tant que dureté Knoop 0,1/20, représente plus de 600, de préférence plus de 650, plus particulièrement plus de 700.

7. Disposition d'appareils de cuisine selon l'une des revendications 1 à 6, **caractérisée en ce que** la résistance moyenne à la flexion du plan de travail (1) représente plus de 80 MPa, plus particulièrement plus de 100 MPa, de préférence plus de 130 MPa, plus particulièrement plus de 165 MPa.

8. Disposition d'appareils de cuisine selon l'une des revendications 1 à 7, **caractérisée en ce que** le coefficient moyen de dilatation thermique longitudinale dans une plage de température entre 20 °C et 700 °C représente moins de $1,1 \cdot 10^{-6}$/K, plus particulièrement moins de $1 \cdot 10^{-6}$/K.

9. Disposition d'appareils de cuisine selon l'une des revendications 1 à 8, **caractérisée en ce que** le plan de travail (1) présente, par rapport à une épaisseur du plan de travail de 4 mm, une transmission IR dans la plage de longueurs d'ondes entre 2300 nm et 2500 nm, supérieure à 50 %, de préférence supérieure à 60 %, plus particulièrement supérieure à 70 % et/ou dans la plage de longueurs d'ondes entre 3500 nm et 3700 nm, supérieure à 50 %, de préférence supérieure à 60 %, plus particulièrement supérieure à 70 %.

10. Disposition d'appareils de cuisine selon l'une des revendications 1 à 9, **caractérisée en ce que** le substrat (6) présente une couleur propre pour la mise à disposition de l'impression en couleurs du plan de travail.

11. Disposition d'appareils de cuisine selon l'une des revendications 1 à 10, **caractérisée en ce que** le plan de travail (1) présente au moins un revêtement pour l'homogénéisation de l'impression en couleurs, plus particulièrement deux revêtements.

12. Procédé de fabrication d'un plan de travail pour une disposition d'appareils de cuisine selon l'une des revendications 1 à 11, **caractérisé par** les étapes suivantes

    - mise à disposition (S1) d'un substrat (6) à base de verre vert, plus particulièrement sous la forme de verre vert fondu ou d'une vitrocéramique fabriquée à partir de ce verre vert, de préférence d'une vitrocéramique HQMK,
    - mise à disposition (S2) d'un four continu (10) avec une pluralité de groupes (21, 22, 23, 24, 25) de chambres, qui sont disposées les unes derrière les autres le long d'une direction de convoyage (100) du substrat (6), et dans lequel chacun des groupes (21, 22, 23, 24, 25) comprend au moins une chambre,
    - introduction (S3) du substrat (6) mis à disposition dans le four continu (10) pour la traversée de celui-ci dans la direction de convoyage (100) de sorte que le substrat (6) est mis à disposition avec une longueur (200), dans la direction de convoyage (100), qui est inférieure à 75 %, de préférence inférieure à 65 %, plus particulièrement inférieure à 60 %, de préférence inférieure à 50 % de la longueur (201), dans la direction de convoyage (100), d'au moins une des chambres du four continu (10),

- augmentation (S4) de la température (400) du substrat (6) jusqu'à une première température de maintien (401) sur une première période (301), plus particulièrement dans un premier groupe (21) de chambres,
- maintien (S5) de la première température de maintien (401) pendant une deuxième période (302), plus particulièrement dans un deuxième groupe (22) de chambres,
- augmentation supplémentaire (S6) de la température (400) jusqu'à une deuxième température de maintien (402) sur une troisième période (303), plus particulièrement dans un troisième groupe (23) de chambres,
- maintien (S7) de la deuxième température de maintien (402) pendant une quatrième période (304), plus particulièrement dans un quatrième groupe (24) de chambres et
- refroidissement (S8) du substrat (6) pour la formation du plan de travail (1), plus particulièrement dans un cinquième groupe (25) de chambres ou à l'extérieur du four continu (10),

dans lequel, en tant que durée pour la deuxième période (302), moins de 50 % de la durée de la première période (301) est choisi et dans lequel la première température de maintien (401) est entre 700 °C et 850 °C et dans lequel la deuxième température de maintien (402) est entre 950 °C et 1200 °C et dans lequel le four continu (10) avec cinq groupes (21, 22, 23, 24, 25) de chambres, est mis à disposition.

EP 3 632 862 B1

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016008264 U1
- WO 99063334 A1
- WO 2017042474 A1
- DE 102018110908 A1
- WO 2012019833 A1